# EUROPÄISCHE PATENTSCHRIFT

(11) **EP 3 300 581 B1**
(45) Veröffentlichungstag und Bekanntmachung des Hinweises auf die Patenterteilung: **07.08.2019**
(21) Anmeldenummer: 17001083.9
(22) Anmeldetag: 26.06.2017
(51) Int. Cl.: A01D 43/08

(54) **FELDHÄCKSLER MIT EINEM ERNTEGUTBEARBEITUNGSKANAL UND EINER MESSLEISTE ZUR ERFASSUNG EINER QUERVERTEILUNG DES ERNTEGUTES IN DEM ERNTEGUTBEARBEITUNGSKANAL**
FIELD HARVESTER COMPRISING A CROP PROCESSING CHANNEL AND A MEASURING BLOCK FOR DETECTING A TRANSVERSE DISTRIBUTION OF CROPS IN THE CROP PROCESSING CHANNEL
ENSILEUSE COMPRENANT UN CANAL DE TRAITEMENT DE RÉCOLTE ET UNE BARRE DE MESURE DESTINÉE À DÉTECTER UNE DISTRIBUTION TRANSVERSALE DE LA RÉCOLTE DANS LE CANAL DE TRAITEMENT DE RÉCOLTE

(30) Priorität: 28.09.2016 DE 102016118353
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Pauck, Jan, 33790 Halle/Westfalen (DE); Schwersmann, Berthold, 49186 Bad Iburg (DE); Johannesmann, Ralf, 33428 Harsewinkel (DE); Dykstra, Martin, 06917 Jessen/Elster (DE); Meyer zu Hörste, Jan, 49214 Bad Rothenfelde (DE)
(74) Vertreter: CLAAS Gruppe

(56) Entgegenhaltungen:
- EP-A1- 2 425 702
- EP-A1- 3 132 711
- DE-A1- 4 041 995

## Beschreibung

Die vorliegende Erfindung betrifft einen Feldhäcksler mit einem Vorsatzgerät zur Aufnahme von Erntegut, das einem Erntegutbearbeitungskanal vorgeordnet ist, der einen Einzugskanal zum Zuführen des Ernteguts In den Feldhäcksier, eine Häckseltrommel zum Verarbeiten des Ernteguts, und einen Auswurfschacht zum Auswerfen des Ernteguts umfasst. Die vorliegende Erfindung betrifft weiterhin ein Vorsatzgerät oder einen Einzugskanal für einen solchen Feldhäcksler sowie ein Verfahren zum Steuern des Feldhäckslers.

Eine ungleichmäßige Beschickung eines Feldhäckslers mit Erntegut kann neben einer unwirtschaftlichen Auslastung zu einer verminderten Häckselqualität des verarbeiteten Ernteguts sowie zu Erntegutstaus und Verstopfungen, Insbesondere im Einzugskanal, führen. Einerseits soll der Feldhäcksler aus Gründen der Energieeffizienz im besten Betriebspunkt des Motors betrieben werden. Andererseits sollen Erntegutstaus vermieden werden.

Den für Feldhäcksler genutzten Vorsatzgeräten ist gemein, dass sie das über die Breite der Vorsatzgeräte geerntete Erntegut mittels Förderorganen auf einen schmalen Einzugsbereich mittig des Vorsatzgerätes zusammen führen, um es dann durch den im Vergleich zur Breite des Vorsatzgerätes schmalen Einzugskanal in den Feldhäcksler einzuführen. Allerdings Ist die Beschaffenheit des Erntegutes, beispielsweise aufgrund sich ändernder Bodeneigenschaften, Feuchtigkeit oder Düngung, nicht überall gleich. Dadurch kann es über die Breite des Vorsatzgerätes zu einer ungleichmäßigen Beschickung kommen. Auch beim Befahren von Hängen kann es zu einer solchen ungleichmäßigen Beschickung kommen. Eine solche ungleichmäßige Beschickung pflanzt sich über alle folgenden Aggregate fort und kann aufgrund der ungleichmäßigen Belastung der Aggregate zu einer unwirtschaftlichen Auslastung des Feldhäckslers führen.

Die sich dadurch ändernde aktuell zu verarbeitende Gutmattendicke kann zudem Einfluss auf die Drehzahl der Einzugsorgane nehmen. Solche Schwankungen sind häufig ursächlich für die Verstopfungen im Einzugskanal und für Wickeleffekte an weiteren am Verarbeitungsprozess beteiligten Förderorganen, beispielsweise an der Einzugsschnecke des Vorsatzgerätes. Die EP 2 281 434 B1 schlägt vor, die Einzugsschnecke des Vorsatzgerätes unabhängig von allen anderen angetriebenen Einzugs- und Förderelementen, die an dem Verarbeitungsprozess des Erntegutes teilnehmen, zu steuern, um Störungen im Betriebsablauf zu vermeiden.

Bei einer dennoch auftretenden Verstopfung muss die Erntefahrt unterbrochen und die Verstopfung beseitigt werden. Dafür werden die Antriebe des Vorsatzgerätes reversiert. Die Druckschrift EP 1 862 057 B1 offenbart einen Maisvorsatz, der, sofern bei einer Verstopfung ein Reversieren des Vorsatzgerätes erforderlich ist, die Ernteverluste minimiert, indem seine Mäh- und Förderelemente unabhängig voneinander zu- oder abschaltbar oder reversierbar sind. Dadurch können gezielt nur die Mäh- und Förderscheiben angesteuert werden, die von der Verstopfung tatsächlich betroffen sind. Dies kann entweder Von einer Steuereinheit, beispielsweise nach vordefinierten Abläufen, erfolgen, oder manuell vom Fahrer individuell und selektiv ausgelöst werden.

Die ungleichmäßige Beschickung führt nicht nur zu Schwankungen der Gutmattendicke im zeitlichen Verlauf. Es können sich auch Schwankungen über die Breite des Einzugskanals ergeben. Der sich über die Breite ergebende Verlauf des Erntegutes ist Im Folgenden als Querverteilung bezeichnet.

Aufgrund der Komplexität solcher Vorgänge, der Breite der Vorsatzgeräte und der daher zu überwachenden Erntefläche, sowie der Menge zu überwachender Parameter ist es einem Fahrer nicht möglich, eine Erntefahrt, bei der der Feldhäcksler möglichst an seiner Leistungsgrenze betrieben wird, über Ihre gesamte Dauer manuell optimal zu steuern.

Aufgabe der vorliegenden Erfindung Ist es daher, einen Feldhäcksler weiter zu verbessern, so dass dieser auch bei einer Auslastung an oder nahe an seiner Leistungsgrenze eine sehr gute Häckselqualität, insbesondere eine gleichmäßige Schnittlänge, gewährleistet, und sich anbahnende Gutflussstörungen frühzeitig erkennt und möglichst verhindert, so dass der Fahrer während der Erntefahrt entlastet ist.

Die Aufgabe wird gelöst mit einem Feldhäcksler mit den Merkmalen des unabhängigen Patentanspruchs 1, einem Vorsatzgerät oder Einzugskanal mit den Merkmalen des unabhängigen Patentanspruchs 12, sowie mit einem Verfahren zum Steuern des Feldhäcksiers mit den Merkmalen des unabhängigen Patentanspruchs 13. Vorteilhafte Ausführungsformen sind den abhängigen Ansprüchen entnehmbar.

Die Aufgabe wird gelöst mit einem Feldhäcksler mit einem Vorsatzgerät zur Aufnahme von Erntegut, das einem Erntegutbearbeitungskanal vorgeordnet ist, der einen Einzugskanal zum Zuführen des Ernteguts In den Feldhäcksler, eine Häckseltrommel zum Verarbeiten des Ernteguts, und einen Auswurfschacht zum Auswerfen des Ernteguts umfasst. Der Einzugskanal des Feldhäcksiers ist bevorzugt lösbar an einem Korpus des Feldhäckslers angeordnet. Welterhin bevorzugt ist das Vorsatzgerät austauschbar am Einzugskanal angeordnet.

Der Feldhäcksler zeichnet sich dadurch aus, dass er eine Messleiste mit einer Vielzahl von Sensoren aufweist, die den Erntegutbearbeitungskanal zumindest teilweise durchsetzt und zur Erfassung einer Querverteilung Im Erntegutbearbeitungskanal vorgesehen ist.

Mit der Messleiste können nicht nur zeitliche Erntegutschwankungen erfasst werden, sondern auch örtliche Erntegutschwankungen über die Breite des Erntegutbearbeltungskanals. Die Messleiste ermöglicht daher eine quantitative Erfassung der Querverteilung, Insbesondere beim Zuführen des Erntegutes in den Feldhäcksler oder an den Aggregaten des Feldhäckslers. Dadurch kann eine ungleichmäßige Quervertellung des Erntegutes unmittelbar erkannt werden. Dies lässt einen Rückschluss auf die Arbeitsqualität des Vorsatzgerätes zu. Auch kann der zeitliche Verlauf der Quervertellung prädiktiv ausgewertet werden. Eine solche Messleiste ermöglicht außerdem eine Erfassung eines Gutumlaufs um eines der Aggregate des Feldhäckslers.

Aggregate des Feldhäckslers sind zur Verarbeitung des Erntegutes vorgesehen. Es sind beispielsweise Einzugsorgane des Einzugskanals, insbesondere Einzugstrommeln und/oder Vorpresstrommeln des Einzugskanals, die Häckseltrommel zum Häckseln des Ernteguts, Konditionierwalzen zum Nachbearbeiten des gehäckselten Ernteguts und/oder eine Nachbeschleunigungstrommel zum Beschleunigen des Ernteguts.

Um während der Erntefahrt eine gleichbleibend gute Häckselqualität zu gewährleisten, weist der Feldhäcksler eine Steuerungs- und Regelungseinrichtung auf, die dazu eingerichtet ist, das Vorsatzgerät und/oder Aggregate des Feldhäckslers in Abhängigkeit von der mit der Messleiste erfassten Querverteilung einzustellen, Vorzugsweise werden das Vorsatzgerät und/oder die Aggregate des Feldhäckslers in Abhängigkeit von der gemessenen Querverteilung gesteuert oder geregelt.

Dafür sind die Sensoren der Messleiste bevorzugt in einer Erstreckungsrichtung der Messleiste nebeneinander angeordnet. Die Erstreckungsrichtung der Messleiste erstreckt sich in einer bevorzugten Ausführungsform parallel zu einer Achse eines Aggregates des Feldhäckslers, an der oder benachbart der die Messleiste angeordnet ist. Ebenso bevorzugt erstreckt sich die Erstreckungsrichtung quer zu einer Gutflussrichtung des Erntegutes durch den Erntegutbearbeitungskanal. Besonders bevorzugt sind die Sensoren im Wesentlichen über die Breite der Messleiste verteilt angeordnet. Dabei ist es ganz besonders bevorzugt, dass die Messleiste sich Im Wesentlichen über die gesamte Breite des Aggregates und/oder des Erntegutbearbeitungskanals erstreckt.

In einer bevorzugten Ausführungsform sind die Sensoren als Drucksensoren oder Kraftsensoren, oder als berührungslose Sensoren ausgebildet Als berührungslose Sensoren sind induktive oder kapazitive Sensoren bevorzugt. Es sind aber auch optische, Ultraschall-, Laser-, Radarsensoren oder Sensoren anderer Ausführungsform bevorzugt. Bei der Ausführungsform der Sensoren als Drucksensoren oder Kraftsensoren löst das Erntegut bei einem Aufprall auf einen der Sensoren, oder wenn es auf den Sensor aufgedrückt wird, einen Kraftimpuls aus. Der Sensor löst dann ein Messsignal aus, das ein Maß für den Kraftimpuls ist.

Die Steuerungs- und Regelungseinrichtung ist bevorzugt dazu ausgebildet, die Messsignale der Sensoren der Messleiste zu erfassen, die Querverteilung anhand der Messsignale zu ermitteln, und Aktoren des Vorsatzgerätes, des Erntegutbearbeitungskanals, insbesondere des Einzugskanals, und/oder der Aggregate anhand der erfassten Querverteilung zu steuern oder zu regeln. Solche Aktoren sind bevorzugt elektromotorische oder hydraulische Antriebe, mit denen Bauteile des Vorsatzgerätes, des Einzugskanals und/oder der Aggregate, insbesondere Förderorgane, Klappen, Finger und/oder Gehäusebauteile, verstellbar, Insbesondere verschiebbar und/oder verdrehbar sind.

Besonders bevorzugt ist die Steuerungs- und Regelungseinrichtung dazu ausgebildet, das Vorsatzgerät und/oder die Aggregate so zu regeln, dass die Querverteilung entlang der Messleiste entweder vergleichmäßigt wird und/oder eine Gutflussstörung, insbesondere ein Gutumlauf um eines der oder die Aggregate oder eine Verstopfung, vermieden wird. Dabei ist es besonders bevorzugt, dass die Steuerung oder Regelung in Abhängigkeit von dem Erntegut und/oder den Erntebedingungen erfolgt.

Der Feldhäcksler weist dafür bevorzugt zumindest eine erste Messleiste auf, die im Einzugskanal, insbesondere an einem Abstrelflineal eines Einzugsorgans oder einer Erntegut-zugewandten Seite des Erntegutbearbeitungskanals, angeordnet ist, und/oder weiterhin bevorzugt weist er zumindest eine zweite Messleiste auf, die an der Hackseltrommel, an einer der Konditionierwalzen oder an der Nachbeschleunlgungstrommel, insbesondere an einer Position außerhalb des aktiven Erntegutstroms, insbesondere oberhalb einer dieser Trommeln, angeordnet ist. Es Ist bevorzugt, dass die erste und/oder zweite Messleiste in einen herkömmlichen Feldhäcksier nachrüstbar ist.

Die Erfassung der Gutverteilung mit der ersten Messleiste im Einzugskanal erfolgt bevorzugt bereits vor dem Schneiden des Erntegutes durch die Häckseltrommel. Dadurch kann ein ungleichmäßiges Ernten und/oder Einziehen von Erntegut entlang des Vorsatzgerätes frühzeitig erkannt werden. Die Messleiste ermöglicht somit eine Bewertung des Vorsatzgerätes. Das Vorsatzgerät kann aktiv, insbesondere durch Auswertung der Auswirkungen einer Veränderung von Einstellparametern des Vorsatzgerätes, geregelt werden. Die Einstellparameter sind bevorzugt Einstellparameter der Aktoren, mit denen die Förderorgane und/oder Bauteile des Vorsatzgerätes verstellbar sind.

Da mit der ersten Messleiste die auf das Erntegutwirkenden Kräfte gemessen werden, ermöglicht sie auch eine Überwachung sowie ein Regelung einer Vorpresseinrichtung Im Einzugskanal.

Zudem können mit der ersten Messleiste Gutflussstörungen frühzeitig erkannt, und Maßnahmen zur Verhinderung von Verstopfungen und/oder Gutumlaufen vorgenommen werden. Dafür werden vorzugsweise das Vorsatzgerät, der Erntegutbearbeltungskanal, und/oder die Aggregate, insbesondere durch Auswertung der Auswirkungen einer Veränderung von Einstellparametern des Vorsatzgerätes, des Erntegutbearbeitungskanals und/oder der Aggregate, geregelt. Solche Einstellparameter sind bevorzugt Einstellparameter der Aktoren, mit denen die Bauteile des Vorsatzgerätes, des Erntegutbearbeitungskanals und/oder der Aggregate verstellbar sind.

Mithilfe der zweiten Messleiste kann ein Strömungsverhalten der Aggregate, insbesondere ein Gutumlauf von Erntegut um eines der Aggregate und/oder eine Verstopfung, erfasst werden. Auch die zweite Messleiste ermöglicht ein frühzeitiges Erkennen von Gutflussstörungen, und ein schnelles Einleiten von Schutzmaßnahmen.

Um die Quervertellung im Feldhäcksler zu vergleichmäßigen und/oder Gutflussstörungen zu vermeiden, ist es bevorzugt, dass die Steuerungs- und Regelungseinrichtung dazu ausgebildet ist, eine Drehzahl zumindest eines der Aggregate des Feldhäckslers und/oder zumindest eines Förderorgans des Vorsatzgerätes in Abhängigkeit von der erfassten Querverteilung einzustellen. Besonders bevorzugt werden
- die Drehzahl eines oder mehrerer Förderorgane des Vorsatzgerätes,
- die Drehzahl eines oder mehrerer Einzugsorgane des Einzugskanals,
- die Drehzahl der Häckseltrommel,
- die Drehzahl der Konditionierwalzen, und/oder
- die Drehzahl der Nachbeschleunigungstrommel,
in Abhängigkeit von der erfassten Querverteilung eingesteilt. Dabei ist es weiterhin bevorzugt, dass das Einstellen der Drehzahl eines oder mehrerer Aggregate des Feldhäcksiers und/oder eines oder mehrerer Förderorgane des Vorsatzgerätes unabhängig voneinander, oder gezielt abhängig voneinander, erfolgt.

In Abhängigkeit von der erfassten Querverteilung werden bevorzugt gezielt einzelne Förderorgane des Vorsatzgerätes gesteuert oder geregelt, insbesondere beschleunigt oder abgebremst. Dadurch wird das Erntegut verschieden stark mit den Förderorgangen des Vorsatzgerätes beschleunigt oder abgebremst. Das Erntegut kann so über die gesamte Breite des Vorsatzgerätes gezielt verteilt werden. Die Querverteilung wird daher bereits im Vorsatzgerät vergleichmäßigt oder sogar ausgeglichen. Dadurch ist die Gutmatte bereits im Einzugskanal und vor dem Häckseln gleichmäßiger dick. Dadurch kann auch bei einer ungleichmäßigen Beschickung des Vorsatzgerätes eine im Wesentlichen gleichmäßige Schnittlänge, das heißt eine gute Häckselqualität, erzielt werden. Weiterhin ist dadurch die Gefahr von Gutflussstörungen, die durch die ungleichmäßige Beschickung hervorgerufen sind, deutlich verringert.

Ebenso bevorzugt werden in Abhängigkeit von der erfassten Querverteilung gezielt die Drehzahl eines oder mehrerer Einzugsorgane, der Häckseltrommel, der Konditionierwalzen, und/oder der Nachbeschleunigungstrommel verstellt, insbesondere beschleunigt oder abgebremst, um die Fördergeschwindigkeit, die Gutmattendicke und/oder die Schnittlänge des Erntegutes einzustellen, und/oder die Gutflussstörungen zu vermeiden.

Alternativ oder zusätzlich ist es bevorzugt, dass die Steuerungs- und Regelungseinrichtung dazu ausgebildet ist,
- Geometrien des Vorsatzgerätes,
- Geometrien des Erntegutbearbeitungskanals, und/oder
- eine auf das Erntegut wirkende Vorpresskraft im Einzugskanal In Abhängigkeit von der erfassten Quarvertellung einzustellen. Auch dabei ist es bevorzugt, dass das Einstellen der Geometrien des Vorsatzgerätes, der Geometrien des Erntegutbearbeitungskanals, und/oder der auf das Erntegut wirkende Vorpresskraft Im Einzugskanal unabhängig voneinander, oder gezielt abhängig voneinander, erfolgt.

Um ein möglichst frühzeitiges Vergleichmäßigen der Erntegutvertellung zu erreichen, ist es dabei bevorzugt, frühzeitig in den Erntegutstrom einzugreifen. Dafür werden bevorzugt Gehäusebauteile und/oder Förderorgane des Vorsatzgerätes und/oder des Einzugskanals verstellt, insbesondere verschoben und/oder verdreht. Besonders bevorzugt ist die Steuerungs- und Regelungseinrichtung dazu ausgebildet,
- eine Form von Begrenzungskämmen oder Begrenzungsblechen.
- eine Position der Begrenzungskämme oder Begrenzungsbleche,
- einen Winkel der Begrenzungskämme oder Begrenzungsbleche,
- einen Abstand eines Förderorgans oder eines Einzugsorgans von den Begrenzungskämmen oder Begrenzungsblechen, und/oder
- einen Abstand der Begrenzungskämme oder Begrenzungsbleche zueinander in Abhängigkeit von der erfassten Querverteilung, Insbesondere unabhängig voneinander, oder gezielt abhängig voneinander, einzustellen. Solche Begrenzungskämme oder Begrenzungsbleche können herkömmlich bereits vorgesehene Bauteile sein, die nun in Abhängigkeit von der Querverteilung verstellbar sind, beispielsweise Gehäusebautelle, Klappen oder Finger. Es sind aber auch Begrenzungskämme oder Begrenzungsbleche bevorzugt, die zu diesem Zweck zusätzlich im Vorsatzgerät und/oder im Einzugskanal vorgesehen sind. Auch durch das Verstellen der Geometrien, insbesondere der Begrenzungskämme oder

Begrenzungsbleche, kann das Erntegut über die gesamte Breite des Vorsatzgerätes und/oder des Einzugskanals gezielt verteilt werden. Dadurch kann die Querverteilung bereits im Vorsatzgerät vergleichmäßigt oder sogar ausgeglichen werden. Sie kann durch Verstellen von Geometrien auch noch im Einzugskanal welter vergleichmäßigt werden.

In einer weiteren bevorzugten Ausführungsform umfasst die Steuerungs- und Regelungseinrichtung einen Festwertspeicher zum Speichern von vordefinierten Einstellparametern und/oder Abläufen. Die Steuerungs- und Regelungseinrichtung ist bevorzugt dazu eingerichtet, die Aktoren in Abhängigkeit von der erfassten Querverteilung gemäß den vordefinierten Einstellparametern und/oder Abläufen zu steuern oder zu regeln. Mithilfe der vordefinierten Einstellparameter und/oder Abläufe sind die Drehzahlen, Geometrien und/oder Vorpresskräfte der Bauteile des Vorsatzgerätes, des Einzugskanals und/oder der Aggregate getrennt voneinander, oder gezielt abhängig voneinander, Insbesondere gleichzeitig, einstellbar. Dabei ist es bevorzugt, dass die Einstellparameter und/oder Abläufe erntegutabhängig und/oder in Abhängigkeit von den Erntebedingungen hinterlegt sind. Die Steuerung oder Regelung der Querverteilung kann dann anhand der vordefinierten Einstellparameter und/oder Abläufe erntegutabhängig und/oder in Abhängigkeit von den Erntebedingungen erfolgen.

Dabei Ist es bevorzugt, dass sie mithilfe der Steuerungs- und Regelungseinrichtung automatisch erfolgt. Weiterhin ist es bevorzugt, dass die Steuerungs- und Regelungseinrichtung eine Benutzerschnittstelle mit Eingabemitteln und Ausgabernitteln für einen Bediener umfasst Vorzugsweise Ist die Benutzerschnittstelle zur Ausgabe, insbesondere zur Anzeige, der erfassten Querverteilung vorgesehen. Die Anzeige der erfassten Querverteilung ermöglicht gemeinsam mit den Eingabemitteln auch das Vorsehen eines manuellen Eingreifens des Bedleners, insbesondere bei einer sich anbahnenden Gutflussstörung. Ein solches manuelles Eingreifen kann sowohl die vordefinierten Abläufe auslösen, als auch vorsehen, dass der Bediener die Aktoren individuell und selektiv auslöst.

Die Aufgabe wird weiterhin gelöst mit einem Vorsatzgerät oder Einzugskanal für einen solchen Feldhäcksler. Vorzugsweise Weisen das Vorsatzgerät oder der Einzugskanal Bauteile auf, Insbesondere Gehäusebauteile, Klappen, Finger und/oder Förderorgane, die in Abhängigkeit von einer erfassten Querverteilung verstellbar sind. Das Vorsatzgerät oder der Einzugskanal weisen weiterhin bevorzugt Aktoren auf, mit denen die Bauteile des Vorsatzgerätes oder des Einzugskanals, Insbesondere Gehäusebauteile, Klappen, Finger und/oder Förderorgane, verstellbar sind. Dafür ist es in einer welteren Ausführungsform bevorzugt, dass das Vorsatzgerät und/oder der Einzugskanal eine Steuerungs- und Regelungseinrichtung aufweist, die dazu eingerichtet ist, die Aktoren in Abhängigkelt von der erfassten Quervertellung zu steuern oder zu regeln. Für die Steuerung oder Regelung der Aktoren ist es aber besonders bevorzugt, eine zentrale Steuerungs- und Regelungseinheit des Feldhäcksiers zu nutzen.

Die Aufgabe wird weiterhin gelöst mit einem Verfahren zum Steuern eines solchen Feldhäcksiers mit den Schritten:
- Erfassen der Messsignale einer Vielzahl von Sensoren einer, Insbesondere sich über eine Breite des Erntegutbearbeitungskanals erstreckenden, Messleiste,
- Ermitteln der Quervertellung anhand der Messsignale, und
- Ansteuern von Aktoren des Vorsatzgerätes und/oder der Aggregate der Erntegutmaschine in Abhängigkeit von der erfassten Querverteilung.

Das Verfahren ermöglicht eine Überwachung der Querverteilung und anhand dieser eine Vergleichmäßigung des Erntegutstromes bereits im Vorsatzgerät oder Einzugskanal, und/oder es ermöglicht ein frühzeitiges Erfassen und Verhindern von Gutflussstörungen.

Vorzugsweise erfolgt eine Auswahl der anzusteuernden Aktoren und/oder ihrer Einstellparameter dabei anhand von vordefinierten, insbesondere erntegutabhängigen und/oder erntebadingungsabhängigen, Einstellparamatern uhd Abläufen.

Die erste und/oder zweite Messleiste und die damit durchgeführte Erfassung der Querverteilung ermöglichen, relevante Daten zur Arbeitsqualität des am Feldhäcksler angeordneten Vorsatzgerätes in Bezug auf die Zuführung des Erntegutes in den Einzugskanal und/oder relevante Daten zur Qualität von Aggregaten in Bezug auf das Zuführen des Erntegutes in nachgelagerte Baugruppen, und/oder zum Strömungsverhalten der Aggregate, insbesondere der Häckseltrommel, zu erheben. Das Vorsatzgerät und/oder der Einzugskanal können dadurch so geregelt werden, dass die Arbeitsqualltät, insbesondere die Häcksellänge des gehäckselten Erntegutes, verbessert und/oder die Effektivität des Verarbeitungsprozesses gesteigert ist Die tatsächlich auf die Erntegutmatte wirkenden Vorpresskräfte sind damit messbar. Zudem kann eine Gutumlaufmenge erfasst und überwacht werden. Dadurch können Gutflussstörungen frühzeitig erkannt und gegebenenfalls verhindert werden.

Das Erfassen der Messsignale der Messleiste wird bevorzugt zyklisch wiederholt, um eine schnelle Erfassung einer ungleichmäßigen Beschickung und/oder einer Gutflussstörung sicher zu stellen.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1 I: n (a) einen Feldhäcksler nach dem Stand der Technik, in (b) Erntegutbearbeitungskanal eines erfindungsgemäßen Feldhäckslers, In (c) Einzugsorgane des Erntegutbearbeitungskanals aus (b), und in (d) eine Häckseltrommel des Erntegutbearbeitungskanals aus (b);
- Fig. 2: in (a) - (c) jeweils schematisch eine Anordnung verschiedener Ausführungsformen eines ersten Typs eines Vorsatzgerätes und eines Einzugskanals eines erfindungsgemäßen Feldhäckslers; und
- Fig. 3: in (a) - (d) jeweils schematisch eine Anordnung verschiedener Ausführungsformen eines zweiten Typs eines Vorsatzgerätes und eines Einzugskanals eines erfindungsgemäßen Feldhäckslers.

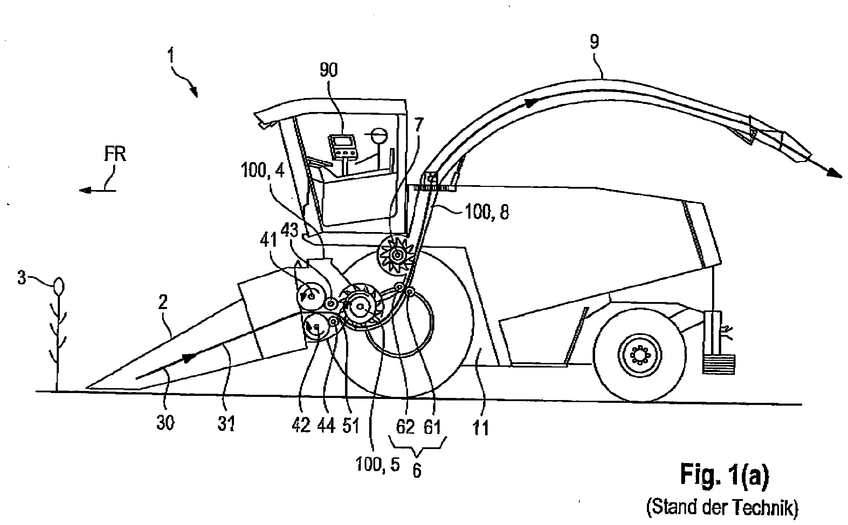

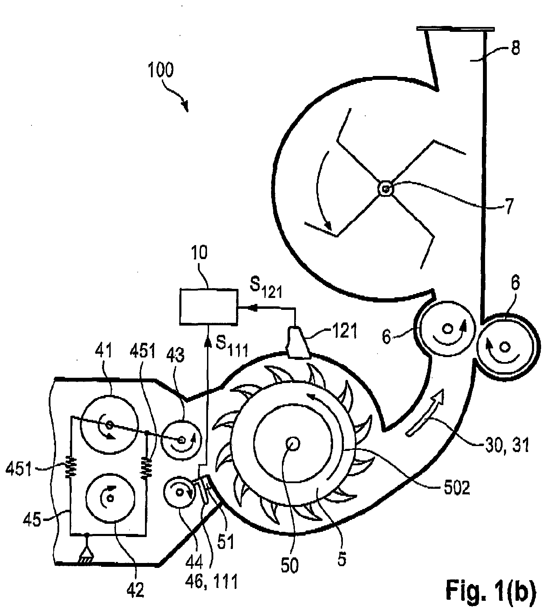

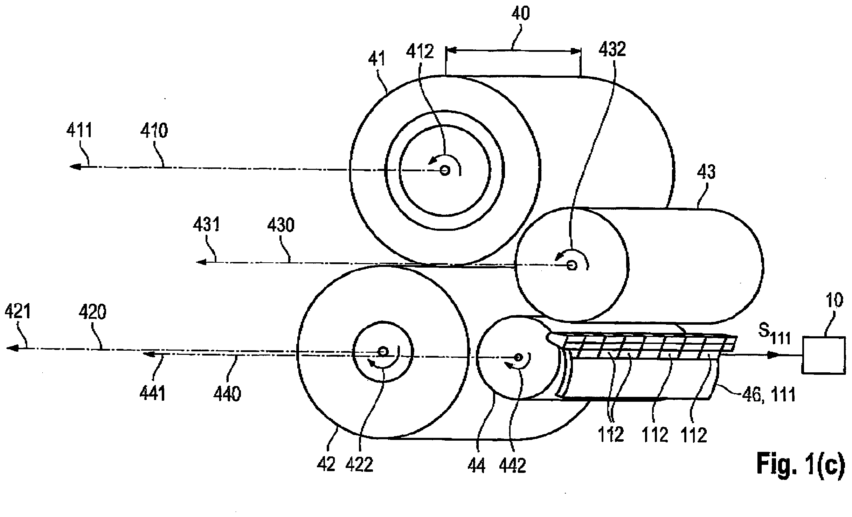

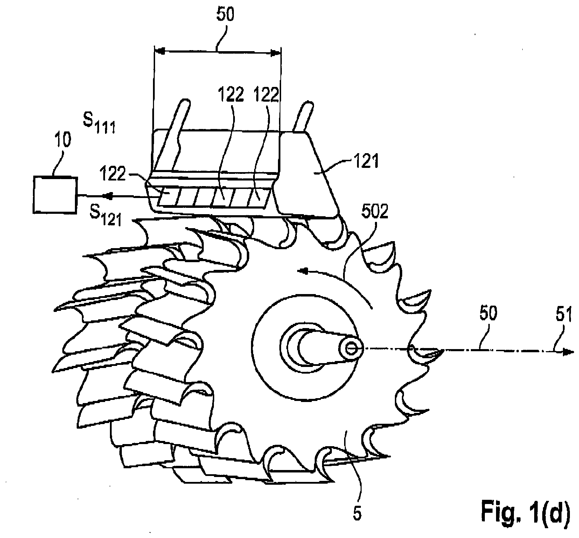

Figur 1 zeigt In (a) einen Feldhäcksler 1 nach dem Stand der Technik. Der Feldhäcksler 1 weist ein Vorsatzgerät 2 auf, das zum Ernten von Erntegut 3 vorgesehen ist. Im Betrieb des Feldhäckslers 1 fährt der Feldhäcksler 1 In eine Fahrtrichtung FR durch einen Erntegutbestand 3 und nimmt dabei mit dem Vorsatzgerät 2 das Erntegut 3 auf. Das Erntegut 3 wird vom Vorsatzgerät 2 zu einem Erntegutbearbeitungskanal 100 des Feldhäckslers 1 gefördert. Der Erntegutbearbeitungskanal 100 umfasst einen Einzugskanal 4 zum Einziehen des Ernteguts 3, eine Häckseltrommel 5 zum Verarbeiten des Ernteguts 3, und einen Auswurfschacht 8 zum Auswerfen des Ernteguts 3.

Der Feldhäcksler 1 weist einen Korpus 11 auf, in dem die Häckseltrommel 5 sowie der Auswurfschacht 8 angeordnet sind. Der Einzugskanal 4 ist lösbar am Korpus 11 befestigt. Er ist daher austauschbar.

Das Vorsatzgerät 2 ist austauschbar an einer dem Korpus 11 abgewandten Seite des Einzugskanals 4 angeordnet. In Abhängigkeit vom Erntegut 3 und dem Erntegutzweck können so verschiedene Vorsatzgeräte 2 genutzt werden. Als Vorsatzgeräte 2 kommen beispielsweise eine Pick up, ein Malsvorsatz, ein Mähwerk (Direct Disc), ein Malspflücker oder ein Schneidwerk, Insbesondere mit Haspel, zum Einsatz.

Im Auswurfschacht 8 sind hier eine Konditioniereinrichtung 6, die zwei Konditionierwalzen 61, 62 umfasst, sowie eine Nachbeschleunigertrommel 7 vorgesehen. Zum Auswerfen des gehäckselten Erntegutes 3 weist der Feldhäcksler einen Auswurfkrümmer 9 auf, der am Auswurfschacht 8 angeordnet ist.

Im Erntebetrieb des Feldhäckslers 1 wird das Erntegut 3 vom Vorsatzgerät 2 geschnitten. Das Vorsatzgerät 2 nimmt das Erntegut 3 dann auf und fördert es zum Einzugskanal 4. Dort wird es mittels Einzugsorganen 41 - 44 beschleunigt und zu einer Erntegutmatte (nicht bezeichnet) zusammen gepresst. Dafür weist der Einzugskanal 4 zwei gegenläufig zueinander betriebene Beschleunigungstrommeln 41, 42 sowie zwei gegenläufig zueinander betriebene Vorpresstrommeln 43, 44 auf. Die beiden Beschleunigungstrommeln 41, 42 und die beiden Vorpresstrommeln 43, 44 sind jeweils in vertikaler Richtung (nicht bezeichnet) etwa übereinander angeordnet. Das Erntegut 3 wird jeweils zwischen den beiden Beschleunigungstrommeln 41, 42 und zwischen den beiden Vorpresstrommeln 43, 44 geführt.

In einer Förderrichtung 30 des Erntegutes 3 hinter der unteren Vorpresstrommel 44 sind ein Abstreiflineal 46 (s. Fig. 1 (b), (c)) zum Abstreifen des Erntegutes 3 von der unteren Vorpresstrommel 44, sowie ein Gegenmesser 51 zum Schneiden des Erntegutes 3 angeordnet. Dem Einzugskanal 4 in Förderrichtung 30 nachgeordnet ist die Häckseltrommel 5 zum Bearbeiten des Ernteguts 3 angeordnet. Die Häckseltrommel 5 weist Messer (nicht bezeichnet) auf, die mit dem Gegenmesser 51 zusammenwirken und das Erntegut 3 häckseln.

Das gehäckselte Erntegut 3 wird dann zu den Konditionierwalzen 61, 62 gefördert, die die Früchte oder Körner aufschließen. Anschließend wird es mit dem Nachbeschleuniger 7 beschleunigt, um dann mit dem Auswurfkrümmer 9 aus dem Feldhäcksler 1 ausgeworfen zu werden.

Zum Anzeigen von Fahrdaten des Feldhäckslers 1 und/oder Erntedaten der Erntefahrt weist der Feldhäcksler 1 eine Bedienerschnittstelle 90 auf, die eine Anzeige (nicht bezeichnet) zum Anzeigen der Daten sowie Eingabemittel (nicht bezeichnet) für den Bediener umfasst.

In Fig. 1 (b) ist der Erntegutbearbeitungskanal 100 eines erfindungsgemäßen Feldhäckslers 1 dargestellt

Im Einzugskanal 4 sind als Einzugsorgane 41 - 44 die beiden Beschleunigungstrommeln 41, 42 und die beiden Vorpresstrommeln 43, 44 angeordnet. Die Beschleunigungstrommeln 41, 42 und die Vorpresstrommeln 43, 44 werden im Betrieb des Feldhäcksiers 1 mittels Federn 451 und/oder Hydraullkzylindern, die hier schematisch dargestellt sind, zusammengedrückt. Das zwischen ihnen hindurchgeführte Erntegut 3 wird dadurch zusammen gepresst.

Der Feldhäcksler 1 weist eine erste Messleiste 111 sowie eine zweite Messleiste 121 auf, die jeweils eine Vielzahl von Sensoren 112, 122 (s. Fig. 1 (c), (d)) aufweisen. Die Messleisten 111, 121 sind quer zur Förderrichtung 30 des Erntegutes 3 im Erntegutbearbeitungskanal 100 angeordnet und durchsetzen ihn. Sie sind zur Erfassung einer Querverteilung des Erntegutes 3 vorgesehen.

Eine ungleichmäßige Querverteilung des Erntegutes 3 quer zur Förderrichtung 30 kann entstehen, wenn der Feldhäcksler 1 einen ungleichmäßigen Erntegutbestand 3 befährt, oder wenn er sich in einer Hanglage befindet und das Erntegut 3 dadurch bereits im Vorsatzgerät 2 verrutscht.

Die erste Messleiste 111 ist im Einzugskanal 4, hier im Abstreiflineal 46 der unteren Vorpresstrommel 44, angeordnet. Die zweite Messleiste 121 ist an der Häckseltrommel 5, hier oberhalb dieser, angeordnet.

Die Sensoren 112, 122 sind hier als Kraftsensoren ausgebildet. Sie senden bei Auftreffen oder Aufliegen von Erntegut 3 ein Messsignal S111, S121 aus, das einer Kraft oder einem Kraftimpuls entspricht, der vom Erntegut 3 auf den jeweiligen Sensor 112, 122 wirkt. Das Messsignal S111, S121 wird von einer Steuerungs- und Regelungseinrichtung 10 des Feldhäcksiers 1 erfasst.

Die Messleisten 111, 121 erstrecken sich jeweils im Wesentlichen über eine Breite B 40 des Erntegutbearbeitungskanals 100. Im Fall der ersten Messleiste 111 entspricht diese einer Breite 40 der Einzugsorgane 41 - 44, insbesondere einer Breite 40 der unteren Vorpresstrommel 44. Im Fall der zweiten Messleiste 121 entspricht diese einer Breite 50 der Häckseltrommel 5. Die Sensoren 112, 122 sind in einer Erstreckungsrichtung (nicht bezeichnet) der Messleiste 111, 121 nebeneinander und im Wesentlichen aneinander angrenzend angeordnet (s. Fig. 1 (c), (d)). Dadurch messen die Messleisten 111, 121 die Querverteilung im Wesentlichen über die Breite 40, 50 des Erntegutbearbeitungskanals 100.

In Fig. 1 (c) ist sichtbar, dass sich die Erstreckungsrichtung (nicht bezeichnet) der ersten Messleiste 111 parallel einer axialen Richtung 411, 421, 431, 441 der Achsen 410, 420, 430, 440 der Einzugsorgane 41 - 44 erstreckt, um die diese drehbar gelagert sind. In Fig. 1 (d) ist sichtbar, dass sich die Erstreckungsrichtung (nicht bezeichnet) der zweiten Messleiste 121 parallel einer axialen Richtung 51 einer Achse 50 der Häckseltrommel 5 erstreckt, um die die Häckseltrommel 5 drehbar gelagert ist. Die Drehrichtungen der Einzugsorgane 41 - 44 sowie der Häckseltrommel 5 sind in den Fig. 1 (c) und (d) jeweils durch einen Pfeil 412, 422, 432, 442, 602 dargestellt.

Die Sensoren 112der ersten Messleiste 111 sind jeweils an einer dem Erntegutstrom 31 zugewandten Seite der Messleiste 111 angeordnet. Das Erntegut 3 strömt über die erste Messleiste 111 und trägt die von einer Vorpresseinrichtung 45 resultierende Kraft. Die Messsignale S111 der ersten Messleiste 111 können daher zur Regelung der Vorpresseinrichtung 45 genutzt werden.

Die Sensoren 122 der zweiten Messleiste 121 sind jeweils außerhalb des aktiven Erntegutstroms 31, das heißt außerhalb des den Feldhäcksler im Wesentlichen optimal durchströmenden Erntegutstroms 31, angeordnet, beispielsweise oberhalb der jeweiligen Trommel 5, 6, 7. Dadurch Ist mit ihnen ein ungewollter Erntegut-Umlauf um die Trommel 5, 6, 7 messbar. Das Erntegut 3 prallt auf die Sensoren 122 der zweiten Messleiste 121 und löst den Kraftimpuls aus. Bei der in Fig. 1 (d) dargestellten zweiten Messleiste 121 prallt das Erntegut 3 auf die Sensoren 122 an der der hier sichtbaren Seite gegenüberliegenden Seite auf.

Die Steuerungs- und Regelungseinrichtung 10 ist dazu ausgebildet, das Vorsatzgerät 2 und/oder die Aggregate 4 - 7 des Feldhäckslers 1, insbesondere die Einzugsorgane 41 - 44, die Häckseltrommel 5, die Kanditionierwalzen 61,62 und/oder die Nachbeschleunigungstrommel 7, in Abhängigkeit von der erfassten Querverteilung einzustellen. Zudem kann sie zum Einstellen der Vorpresseinrichtung 45 vorgesehen sein. Dafür erfasst sie die Messsignale S111, S121 der Sensoren 112, 122, und ermittelt daraus die aktuelle Quervertellung.

In Abhängigkeit von der erfassten Querverteilung steuert die Steuerungs- und Ragelungseinrichtung 10 dann Aktoren (nicht gezeigt) des Vorsatzgerätes 2, des Einzugskanals 4 und/oder der Aggregate 4 - 7 an.

Die Messleisten 111, 121 werden zyklisch abgefragt, so dass die Veränderung der Quervertellung erfassbar ist. Diese information kann zur Regelung der Aktoren genutzt werden.

Um eine erntegutabhängige und/oder erntebedingungsabhängige Regelung des Vorsatzgerätes 2, des Einzugskanals 4 und/oder der Aggregate 4 - 7 zu ermöglichen, kann eine Auswahl einzelner oder mehrerer Aktoren und/oder Ihrer Einstellparameter anhand von vordefinierten Einstellparametern und Abläufen erfolgen, die in einem Festwertspeicher (nicht gezeigt) der Steuerungs- und Regelungseinrichtung 10 hinterlegt sind.

Die Steuerungs- und Regelungseinrichtung umfasst eine Benutzerschnittstelle 90 (s. Fig. 1), die Eingabemittel zum Eingreifen durch den Bediener sowie eine Ausgabe, Insbesondere eine Anzeige, umfasst. Die Anzeige Ist zur Darstellung der erfassten Querverteilung vorgesehen. Dafür wird hier die ohnehin zur Anzeige der Fahrdaten und/oder Erntedaten vorgesehene Benutzerschnittstelle 90 genutzt, Durch die Anzeige der erfassten Querverteilung kann der Bediener manuell, insbesondere bei einer sich anbahnenden Gutflussstörung, eingreifen.

Die Steuerungs- und Regelungseinrichtung 10 ist dazu ausgebildet, die Quervertellung des Erntegutes 3 zu vergleichmäßigen und/oder Gutflussstörungen, insbesondere einen Gutumlauf um eines der Aggregate 4 - 7 des Feldhäckslers 1 oder eine Verstopfung, zu erkennen und möglichst zu verhindern. Dafür steuert die Steuerungs- und Regelungseinrichtung 10 die Aktoren des Vorsatzgerätes 2, des Einzugskanals und/oder der Aggregate 4 - 7.

Dabei werden beispielsweise die Drehzahl eines oder mehrerer Förderorgane 22, 27, 28 des Vorsatzgerätes 2, die Drehzahl eines oder mehrerer der Einzugsorgane 41 - 44 des Einzugskanals 4, die Drehzahl der Häckseltrommel 5, die Drehzahl der Konditionierwalzen 61, 62, und/oder die Drehzahl der Nachbeschleunigungstrommel 7 In Abhängigkeit von der erfassten Querverteilung verändert. Weiterhin werden dabei beispielsweise Geometrien des Vorsatzgerätes 2, und/oder Geometrien des Einzugskanals 4 geregelt. Es kann auch die auf das Erntegut 3 wirkende Vorpresskraft im Einzugskanal 4 in Abhängigkeit von der erfassten Querverteilung verstellt werden.

Solche Geometrien können beispielsweise durch eine Form von Begrenzungskämmen oder Begrenzungsblechen 23, 24, 26, 26, 261, eine Position der Begrenzungskämme oder Begrenzungsbleche 23, 24, 25, 26, 261, einen Winkel αi der Begrenzungskämme oder Begrenzungsbleche 23, 24, 25, 26, 261, einen Abstand Ai, Hi eines Förderorgans 22, 27, 28 oder eines Einzugsorgans 41 - 44 von den Begrenzungskämmen oder Begrenzungsblechen 23, 24, 25, 26, 261, und/oder einen Abstand Ai, Hi der Begrenzungskämme oder Begrenzungsbleche 23, 24, 25, 26, 261 zueinander vorgegeben sein. Durch das Verstellen der Begrenzungskämme oder Begrenzungsbleche 23, 24, 25, 26, 261, ihrer Position, Winkel αi, und/oder eines der Abstände Ai, Hi wird die Förderrichtung eines Tells des Ernteguts Im Vorsatzgerät und/oder im Einzugskanals gezielt beeinflusst, so dass sich das Erntegut insgesamt gleichmäßiger Im Vorsatzgerät und/oder im Einzugskanal verteilt.

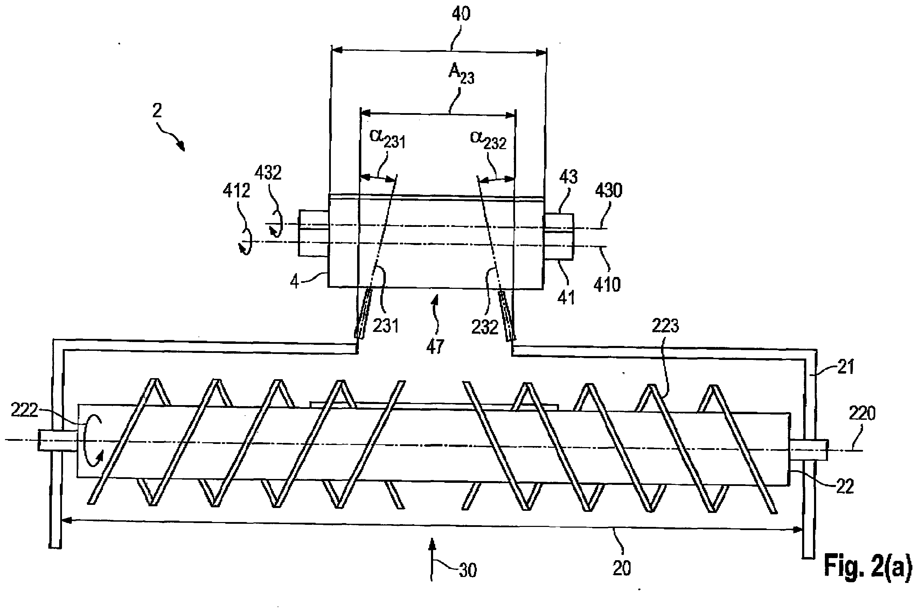

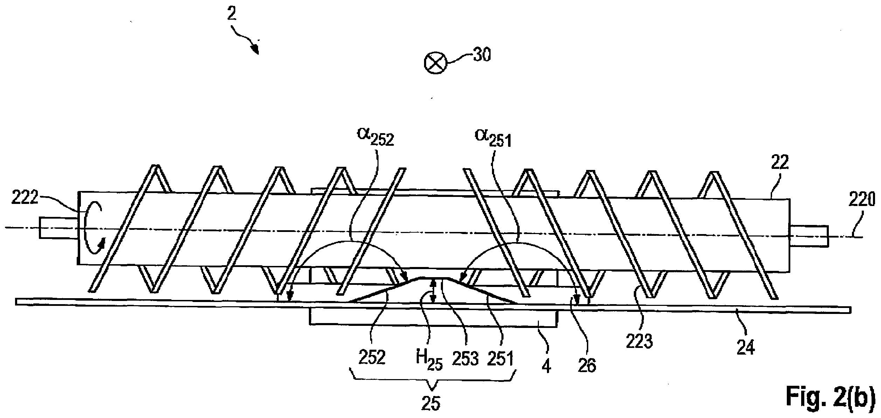

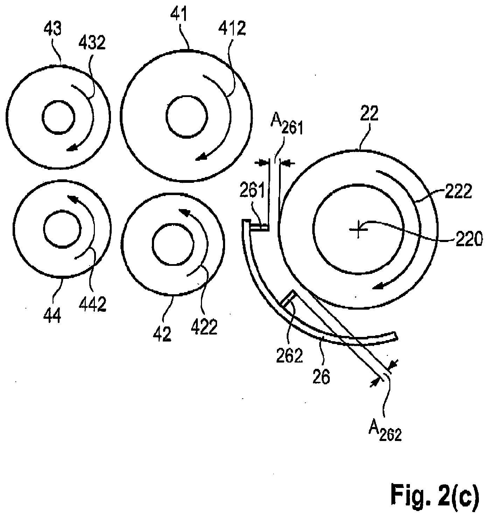

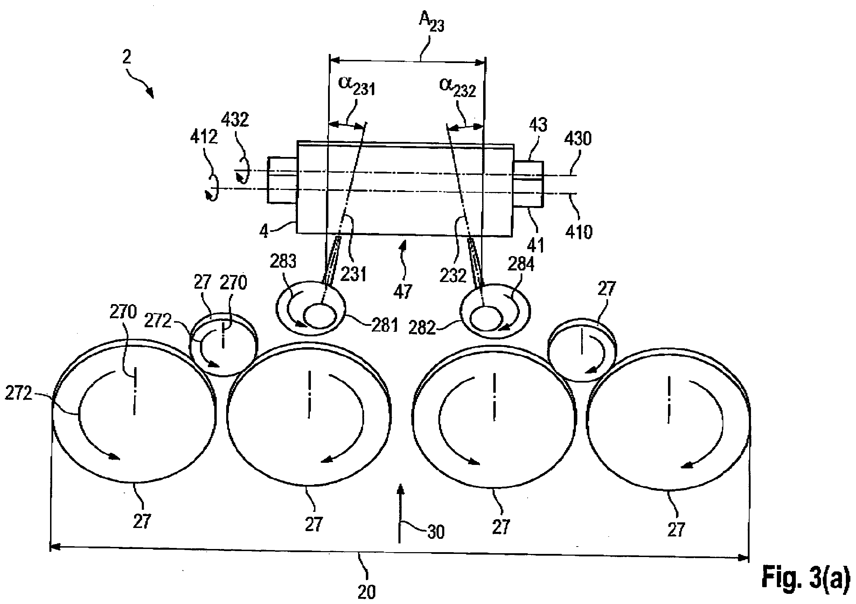

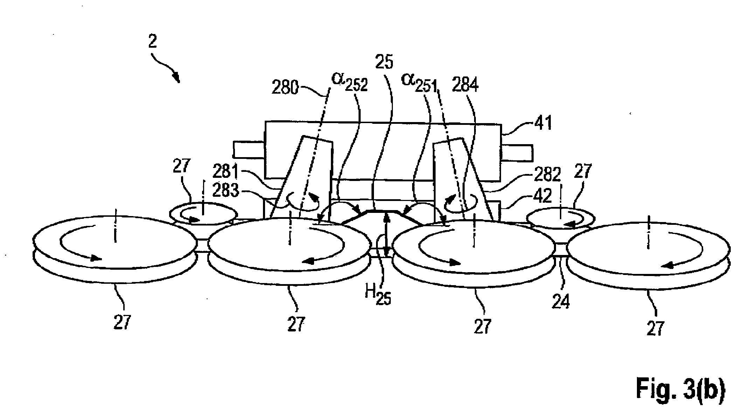

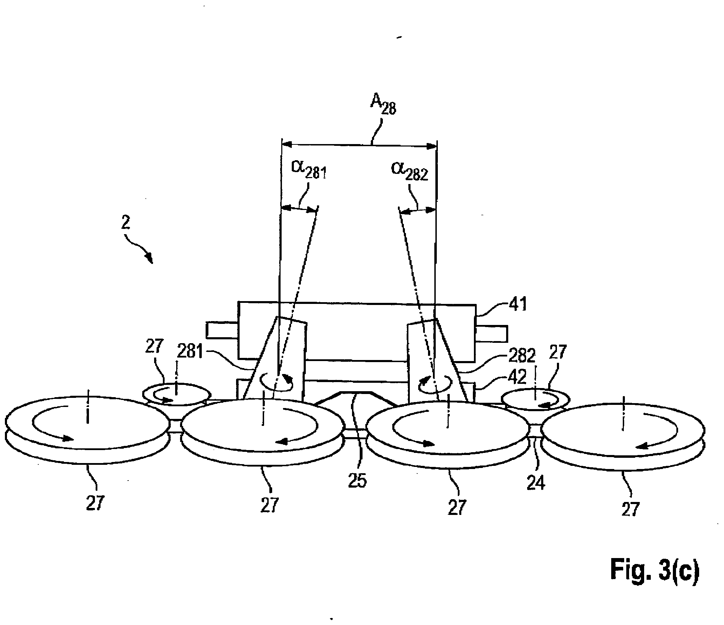

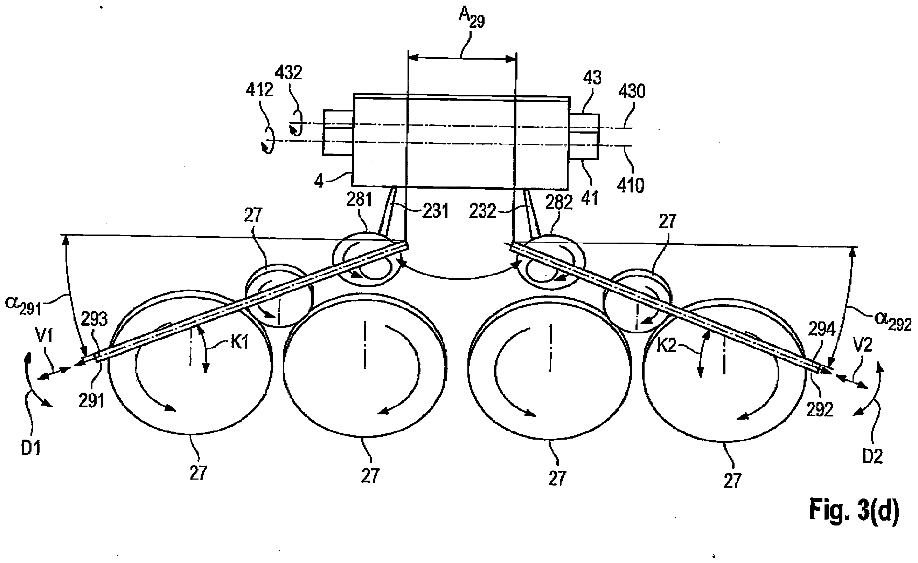

Das Verstellen der Begrenzungskämme oder Begrenzungsbleche 23, 24, 25, 26, 261, ihrer Position, Winkel αi, und/oder eines der Abstande Ai, Hi zeigen die Figuren 2 und 3 anhand verschiedener Vorsatzgeräte beispielhaft und schematisch.

In den Flg, 2 (a) - (c) ist ein Vorsatzgerät 2 vom Typ einer Pick up schematisch gezeigt. Im Rahmen der Fig. 2 (a) - (c) werden die Begriffe Vorsatzgerät 2 und Pick up daher synonym verwendet. Fig. 2 (a) zeigt die Pick up 2 sowie den in Förderrichtung 30 hinter der Pick up 2 angeordneten Einzugskanal 4 in einer Ansicht von oben.

Die Pick up 2 weist ein Gehäuse 21 auf, an dem eine Einzugsschnecke 22 um eine Einzugsschneckenachse 220 drehbar gelagert ist. Die Einzugsschnecke 22 erstreckt sich quer zu einer Förderrichtung 30 des Erntegutes 3 in die Pick up 2. Die Einzugsschnecke 22 weist zum Fördern des Erntegutes 3 Schneckenelemente 223 auf, die hier schematisch dargestellt sind. Zudem ist eine Drehrichtung der Einzugsschnecke 22 durch einen Pfeil 222 gezeigt.

Das Vorsatzgerät 2, insbesondere die Schneckenelemente 223, sind in einer unverstellten Grundeinstellung spiegelsymmetrisch zu einer fiktiven Mittellinie (nicht dargestellt) angeordnet, die sich in Förderrichtung 30 mittig durch des Vorsatzgerätes erstreckt 2. Dadurch wird das geerntete Erntegut 3 bei gleichmäßiger Beschickung des Vorsatzgerätes 2 gleichmäßig zum mittig angeordneten Einzugskanal 4 geleitet.

Das Gehäuse 21 der Pick up 2 weist aber Begrenzungsbleche 231, 232 auf, die in Förderrichtung 30 vor dem Einzugskanal 4 angeordnet sind. Die Begrenzungsbleche 231, 232, im Folgenden als Einwelsebleche 231, 232 bezeichnet, begrenzen den Erntegutstrom 31 an gegenüberliegenden Seiten quer zur Förderrichtung 30. Sie sind ungleich verstellbar.

Mit der Pick up 2 wird das Erntegut 3 geschnitten und mittels der Einzugsschnecke 22 in den Einzugskanal 4 gefördert. In der Fig. 2 (a) ist der Einzugskanal 4 schematisch gezeigt. Sichtbar sind eine Einzugsöffnung 47 sowie von den Einzugsorganen 41 - 44 die obere Einzugstrommel 41 und die obere Vorpresstrommel 43 des Einzugskanals 4. Durch die Einzugsöffnung 47 wird das Erntegut 3 den Einzugsorganen 41, 43 zugeführt. Die Einzugsorgane 41, 43 erstrecken sich jeweils entlang einer Trommelachse 410, 430. Die hier sichtbare obere Einzugstrommel 41 und obere Vorpresstrommel 43 sind in derselben Richtung drehbar Im Einzugskanal 4 gelagert. Die Drehrichtungen sind jeweils durch einen Pfeil 412, 432 dargestellt.

Das Erntegut 3 wird über eine gesamte Breite 20 der Pick up 2 aufgenommen und mittels der Einzugsschnecke 22 in die Mitte (nicht bezeichnet) der Pick up 2 gefördert. Die Breite 40 des Einzugskanals 4 ist in der Regel erheblich kleiner als die der Pick up 2. Daher führt ein über die Breite 20 der Pick up 2 ungleichmäßiger Erntegutbestand 3 zu einer ungleichmäßigen Beschickung der Pick up 2, und dadurch auch zu einer ungleichmäßigen Beschickung des Einzugskanals 4.

Um die Querverteilung des Erntegutes 3 zu beeinflussen, sind die das Erntegut 3 in den Einzugskanal 4 hinein führenden Einweisebleche 231, 232 verdrehbar vorgesehen, so dass sich ihr Winkel α231, α232 zur Förderrichtung 30 jeweils ändert. Dadurch kann eines der oder können die Einwelsebleche 231, 232 so verstellt werden, dass sich ein Abstand A23 der Einweisebleche 231, 232 voneinander in Förderrichtung 30 verjüngt. Die Einweisebleche 231, 232 sind dabei unabhängig voneinander verstellbar. Dadurch kann der Erntegutstrom 31 beim Einlaufen In den Einzugskanal 4 durch eines der beiden Einweisebleche 231, 232 stärker zur Mitte geführt werden, als durch das andere der belden Einweisebleche 231, 232. Ein Teil des durch das stärker zur Mitte führende Einweiseblech 231, 232 geführten Emtegutes 3 wird so auf die Seite des Erntegutkanals 4 des weniger stark zur Mitte führenden Einweisebleches 231, 232 geleitet, Dadurch wird die ungleichmäßige Beschickung zumindest teilweise ausgeglichen,

Fig. 2 (b) zeigt eine Frontansicht der Pick up 2. Dargestellt Ist auch die hier hinter dar Pick up 2 angeordnete Einzugsöffnung 47 des Einzugskanals 4.

Bodenseitig Ist die Pick up 2 durch ein Bodenblech 24 begrenzt. Das Bodenblech 24 ist unterhalb der Einzugsschnecke 22 angeordnet und erstreckt sich parallel der Einzugsschneckenachse 220. Mittig des Vorsatzgerätes 2 sind am Bodenblech 24 Umleitbleche 251, 252, 253 angeordnet, die gegenüber diesem erhaben sind. Die Umleitbleche 251, 252, 253 sind In Förderrichtung 30 vor, und/oder unterhalb der Einzugsschnecke 22, und vor dem Einzugskanal 4 angeordnet. Hinter den Umleitblechen 251, 252, 253, in Förderrichtung 30 hinter der Einzugsschnecke 22 ist ein Schneckenblech 26 vorgesehen, das bogenförmig, insbesondere kreisförmig, ausgeformt ist, so dass es die Einzugsschnecke 22 teilweise umgreift. Das Schneckenblech 26 Ist von der Einzugsschnecke 22 beabstandet (s. Fig. 2(c)).

Die Umleitbleche 251, 252, 253 umfassen ein mittig angeordnetes Oberblech 253, das sich hier etwa parallel des Bodenbleches 24 erstreckt, sowie zwei Seitenbleche 251, 252, die an gegenüberliegenden Seiten (nicht bezeichnet) des Oberblechs 253 angeordnet sind und jeweils eine Rampe zwischen dem Bodenblech 24 und dem Oberblech 253 bilden.

In Förderrichtung 30 kann sich das Oberblech 253 oder können sich das Oberblech 253 sowie die Seltenbleche 251, 252 verjüngen, so dass die Umformbleche 251, 252, 253 in Förderrichtung 30 spitz zulaufen.

Sichtbar ist, dass ein Abstand H25 des Oberbleches 253 verstellbar vorgesehen ist. Zusätzlich oder alternativ kann jeweils ein Winkel α221, α252 eines der Seitenbleche 251, 252 oder beider Seitenbleche 251, 252 zum Bodenblech 24, insbesondere unabhängig voneinander, verstellbar vorgesehen sein.

Durch Verstellen der Umleitbleche 251, 252, 253 kann gezielt weniger Erntegut 3 des Erntegutstroms 31 zur Mitte der Pick up 2 und des Einzugskanals 4 geführt werden. Bei ungleichem Verstellen der Seltenbleche 251, 252 kann dies an den gegenüberliegenden Seiten der Pick up 2 ungleich erfolgen. Dadurch ist bei ungleichmäßiger Beschickung eine Vergleichmäßigung der Quervertellung des Erntegutes 3 möglich.

Flg. 2 (c) zeigt schematisch ein Schnittbild mittig durch die Einzugsschnecke 22 der Pick up 2 und die Einzugsorgane 41 - 44 des Einzugskanals 4. Unterhalb der Einzugsschnecke 22 Ist das Schneckenblech 26 sichtbar. Am Schneckenblech 26 sind Zuführleisten 261 angeordnet. Das Schneckenblech 26 sowie die Zuführleisten 261 sind von der Einzugsschnecke 22 beabstandet.

Um Einfluss auf den Erntegutstrom 31 und die Querverteilung zu nehmen, ist ein Abstand A261, A262 der Zuführleisten 261 von der Einzugsschnecke 22 veränderbar vorgesehen. Dafür sind das Schneckenblech 26 und/oder die Einzugsschnecke 22 höhenverstellbar und/oder tiefenverstellbar. Alternativ oder zusätzlich ist das Schneckenblech 26 um eine Bodenblech- nahe Achse (nicht gezeigt) drehbar.

Alternativ oder zusätzlich können auch die Zuführleisten 261 verdrehbar und/oder im Schneckenblech 26 versenkbar vorgesehen sein.

Alternativ oder zusätzlich sind die Drehzahlen der Einzugsorgane 41 - 44 und/oder der Einzugsschnecke 22 veränderbar vorgesehen. Dies ist durch Pfeile 412, 422, 432, 442, 222, die sich In eine Umfangsrichtung der Einzugsorgane 41 - 44 und der Einzugsschnecke 22 erstrecken, schematisch gezeigt.

In den Fig. 3 (a) - (d) ist ein Vorsatzgerät 2 vom Typ eines Maisvorsatzes schematisch gezeigt. Im Rahmen der Fig. 3 (a) - (d) werden die Begriffe Vorsatzgerät 2 und Malsvorsatz daher synonym verwendet.

Auch in den Fig. 3 (a) - (d) sind jeweils der Maisvorsatz 2 und der in Förderrichtung 30 dahinter angeordnete Einzugskanal 4 schematisch gezeigt, Dabel zeigen die Fig. 3 (a) und (d) jeweils eine Ansicht von oben auf deh Malsvorsatz 2 und die Fig. 3 (b) und (c) jeweils eine Frontansicht von vorn.

Der Maisvorsatz 2 weist über seine Breite 20 mehrere vordere, Insbesondere gleich große Förderorgane 27 auf, die quer zur Förderrichtung 30 nebeneinander angeordnet .sind. In der hier gezeigten Ausführungsform ist jeweils hinter und zwischen zwei äußeren, vorderen Förderorganen 27 ein hinteres, kleineres Förderorgan 27 angeordnet. Diese Anordnung der Förderorgane 27 ist hier aber nur beispielhaft gewählt. Die Förderorgane 27 sind jeweils um eine Förderorganachse 270, die sich quer zur Förderrichtung 30, insbesondere in etwa vertikaler Richtung, erstreckt, drehbar angeordnet.

Die Förderorgane 27 werden jeweils in eine Drehrichtung 272 so angetrieben, dass das Erntegut 3 über die Breite 20 des Maisvorsatzes 2 geerntet und zum mittig angeordneten Einzugskanal 4 gefördert wird.

Hinter diesen Förderorganen 27 ist vor dem Einzugskanal 4 jeweils beldseitig ein weiteres als Einweisestern 281, 282 ausgebildetes Förderorgan angeordnet. Die Einweisesterne 281, 282 sind jeweils in gegensätzliche Richtungen 283, 284 um eine, sich Insbesondere in einem Winkel α281, α282 zur Vertikalen erstreckende, Einwelsesternachse 280 drehbar.

Auch der Malsvorsatz 2 ist in einer unverstellten Grundelnstellung spiegelsymmetrisch zur Mittelachse angeordnet. Jedoch weist auch der Malsvorsatz 2 ungleich verstellbare Bauteile 231, 232, 281, 282, 291, 292 auf.

Bei dem in der Fig. 3 (a) dargestellten Malsvorsatz 2 weist das Gehäuse (nicht dargestellt) die als Einweisebleche 231, 232 ausgebildeten Begrenzungsbleche 231, 232 auf, die in Förderrichtung 30 vor dem Einzugskanal 4 angeordnet sind. Die Einweisebleche 231, 232 sind In analoger Welse zu denen die Pick up 2 der Fig. 2 (a) verstellbar.

In Fig. 3 (b) Ist für der Malsvorsatz 2 in analoger Weise zur Darstellung der die Pick up 2 beschreibenden Fig. 2 (b) das Verstellen des am Bodenblech 24 angeordneten Umleitbleches 25 gezeigt.

Fig. 3 (c) zeigt eine Ausführungsform des Maisvorsatzes 2, bei der die Winkel α281, α282 der Einweisesterne 281, 282 zur Vertikalen jeweils verstellbar sind. Die Winkel α281, α282 der beiden Einwelsesterne 281, 282 sind dabei unabhängig voneinander, und daher ungleich groß, verstellbar. Dadurch wird das Erntegut 3 an dem stärker von der Vertikalen weg geneigten Einweisestern 281, 282 starker zur Mittel des Einzugskanals 4 geleitet.

Fig. 4 (c) zeigt schließlich eine Ausführungsform des Malsvorsatzes 2, bei dem beidseitig des Malsvorsatzes 2 jeweils ein Einwelsegestänge 291, 292 vorgesehen ist. Die Einweisagestänge 291, 292 sind oberhalb der Förderorgane 27 und Einweisesterne 281, 282 angeordnet. Durch Verschieben in oder gegen eine Verschieberichtung V1, V2, Drehen In oder gegen eine Drehrichtung D1, D2 und/oder Kippen in oder gegen eine Kipprichtung K1, K2 sind die Einweisegestänge 291, 292 ungleich verstellbar. Dadurch wird das Erntegut 3 mit ihnen ungleich stark in den Einzugskanal 4 geleitet.

In analoger Welse zum Pick up 2 der Fig. 2 können alternativ oder zusätzlich die Drehzahlen der Einzugsorgane 41 - 44 und/oder der Förderorgane 27 und/oder Einweisesterne 281, 282 veränderbar vorgesehen sein.

Zudem können auch andere Bauteile (nicht gezeigt) der Vorsatzgeräte 2 veränderbar und/oder zusätzliche, ungleich zueinander verstellbare Bauteile (nicht gezeigt) vorgesehen sein, die die Förderrichtung 30 des Erntegutstroms 31 beeinflussen.

Die Erfindung ist auch nicht auf die Vorsatzgeräte 2 Pick up und Malsvorsätze beschränkt, sondern auch für andere Typen Vorsatzgeräte 2 anwendbar, Insbesondere für Mähwerke (Direct Disc), Maispflücker oder Schneidwerke, insbesondere mit Haspel.

### Bezugszeichenliste

- 1: Feldhäcksler
- 11: Korpus
- 2: Vorsatzgerät
- 20: Breite des Vorsatzgerätes
- 21: Rahmen
- 22: Einzugsschnecke
- 220: Einzugsschneckenachse
- 222: Einzugsschneckendrehrichtung
- 223: Schneckenwerkzeug
- 231, 232: Begrenzungsblech, Einwelseblech
- 24: Begrenzungsblech, Bodenblech
- 25: Begrenzungsblech, Umleitblech
- 251, 252: Begrenzungsblech, Seitenblech
- 253: Begrenzungsblech, Oberblech
- 26: Begrenzungsblech, Schneckenblech
- 261: Zuführleiste
- 27: Förderorgan
- 270: Förderorganachse
- 272: Förderorgandrehrichtung
- 281, 282: Förderorgan, Einwelsestern
- 280: Einwelsesternachse
- 283: Einweisesterndrehrichtung
- 29: Einweisegestänge
- 3: Erntegut, Erntegutbestand
- 30: Förderrichtung
- 31: Erntegutstrom
- 4: Einzugskanal
- 40: Breite des Erntegutbearbeitungskanals, Einzugskanals
- 41, 42: Einzugsorgan, Einzugstrommel
- 43, 44: Einzugsorgan, Vorpresstrommel
- 411, 421, 431, 441: Einzugstrommelachsen
- 412, 422, 432, 442: Einzugstrommeldrehrichtung
- 45: Vorpresseinrichtung
- 451: Spannfeder
- 46: Abstreiflineal
- 47: Einzugsöffnung
- 5: Häckseltrommel
- 50: Breite des Erntegutbearbeitungskanals, Häckseltrommel
- 50: Häckseltrommelachse
- 502: Drehrichtung Häckseltrommel
- 51: Gegenschneide
- 6: Konditioniereinrichtung
- 61, 62: Konditionierwalze
- 7: Nachbeschleunigungstrommel
- 8: Auswurfkanal
- 9: Auswurfkrümmer
- 90: Bedienerschnittstelle
- 100: Erntegutbearbeltungskanal
- 111, 112: Erste, zweite Messleiste
- 112, 122: Sensoren
- S111, S121: Messsignale
- FR: Fahrtrichtung
- αl: Winkel
- Ai: Abstand
- Hl: Höhe
- V1, V2: Verschieberichtung
- D1, D2: Drehrichtung
- K1, K2: Kipprichtung

## Patentansprüche

1. Feldhäcksler (1), mit einem Vorsatzgerät (2) zur Aufnahme von Erntegut (3), das einem Erntegutbearbeitungskanal (100) vorgeordnet ist, der einen Einzugskanal (4) zum Zuführen des Ernteguts (3) in den Feldhäcksler (1), eine Häckseltrommel (5) zum Verarbeiten des Ernteguts (3), und einen Auswurfschacht (8) zum Auswerfen des Ernteguts (3) umfasst,
**dadurch gekennzeichnet, dass**
der Feldhäcksler (1) zudem eine Messleiste (111, 121) mit einer Vielzahl von Sensoren (112, 122) aufweist, die den Erntegutbearbeitungskanal (100) zumindest teilweise durchsetzt und zur Erfassung einer Querverteilung des Erntegutes im Erntegutbearbeitungskanal (100) vorgesehen ist.

2. Feldhäcksler (1) nach Anspruch 1, **dadurch gekennzeichnet, dass** er eine Steuerungs- und Regelungseinrichtung (10) umfasst, die dazu vorgesehen ist, das Vorsatzgerät (2) und/oder Aggregate (4 - 7) des Feldhäckslers (1), insbesondere Einzugsorgane (41 - 44) des Einzugskanals (4), eine Vorpresseinrichtung (45) des Einzugskanals (4), die Häckseltrommel (5), Konditionierwalzen (61, 62) und/oder eine Nachbeschleunigungstrommel (7), in Abhängigkeit von der erfassten Querverteilung einzustellen.

3. Feldhäcksler (1) nach einem der vorhergehenden Ansprüche, **dadurch gekennzeichnet, dass** zumindest eine erste Messleiste (111) im Einzugskanal (4), insbesondere an einem Abstreiflineal (46) eines Einzugsorgans (44) oder einer Erntegut-zugewandten Seite des Erntegutbearbeitungskanals (100), und/oder eine zweite Messleiste (121) an der Häckseltrommel (5), an einer der Konditionierwalzen (61, 62) oder an der Nachbeschleunigungstrommel (7) angeordnet ist.

4. Feldhäcksler (1) nach einem der vorhergehenden Ansprüche, **dadurch gekennzeichnet, dass** die Steuerungs- und Regelungseinrichtung (10) dazu ausgebildet ist, das Vorsatzgerät (2) und/oder die Aggregate (4 - 7) so zu steuern oder zu regeln, dass die Querverteilung, insbesondere entlang der Messleiste (111, 121), vergleichmäßigt ist und/oder ein Gutumlauf um eines der Aggregate (4 - 7) des Feldhäckslers zu verhindern.

5. Feldhäcksler (1) nach einem der vorhergehenden Ansprüche, **dadurch gekennzeichnet, dass** die Steuerungs- und Regelungseinrichtung (10) dazu ausgebildet ist, eine Drehzahl zumindest eines der Aggregate (41 - 44, 5, 61, 62, 7) des Feldhäckslers (1) und/oder zumindest eines Förderorgans (22, 27, 28) des Vorsatzgerätes (2), insbesondere
• die Drehzahl eines oder mehrerer Förderorgane (22, 27, 28) des Vorsatzgerätes (2),
• die Drehzahl eines oder mehrerer Einzugsorgane (41 - 44) des Einzugskanals (4),
• die Drehzahl der Häckseltrommel (5),
• die Drehzahl der Konditionierwalzen (61, 62), und/oder
• die Drehzahl der Nachbeschleunigungstrommel (7),
in Abhängigkeit von der erfassten Querverteilung, insbesondere unabhängig voneinander, einzustellen.

6. Feldhäcksler (1) nach einem der vorhergehenden Ansprüche, **dadurch gekennzeichnet, dass** die Steuerungs- und Regelungseinrichtung (10) dazu ausgebildet ist,
• Geometrien des Vorsatzgerätes (2),
• Geometrien des Erntegutbearbeitungskanals (100), und/oder
• eine auf das Erntegut wirkende Vorpresskraft im Einzugskanal (4)
in Abhängigkeit von der erfassten Querverteilung, insbesondere unabhängig voneinander, einzustellen.

7. Feldhäcksler (1) nach einem der vorhergehenden Ansprüche, **dadurch gekennzeichnet, dass** die Steuerungs- und Regelungseinrichtung (10) dazu ausgebildet ist,
• eine Form von Begrenzungskämmen oder Begrenzungsblechen (23, 24, 25, 26, 261),
• eine Position der Begrenzungskämme oder Begrenzungsbleche (23, 24, 25, 26, 261),
• einen Winkel (ai) der Begrenzungskämme oder Begrenzungsbleche (23, 24, 25, 26, 261),
• einen Abstand (Ai, Hi) eines Förderorgans (22, 27, 28) oder eines Einzugsorgans (41 - 44) von den Begrenzungskämmen oder Begrenzungsblechen (23, 24, 25, 26, 261), und/oder
• einen Abstand (Ai, Hi) der Begrenzungskämme oder Begrenzungsbleche (23, 24, 25, 26, 261) zueinander
in Abhängigkeit von der erfassten Querverteilung, insbesondere unabhängig voneinander, einzustellen.

8. Feldhäcksler (1) nach einem der vorhergehenden Ansprüche, **dadurch gekennzeichnet, dass** die Steuerungs- und Regelungseinrichtung (10) eine Benutzerschnittstelle (90) umfasst, die zur Ausgabe, insbesondere zur Anzeige, der erfassten Querverteilung vorgesehen ist.

9. Feldhäcksler (1) nach einem der vorhergehenden Ansprüche, **dadurch gekennzeichnet, dass** die Sensoren (112, 122) der Messleiste (111, 121) nebeneinander angeordnet sind, und im Wesentlichen über die Breite (40, 50) der Messleiste (111, 121) verteilt angeordnet sind.

10. Feldhäcksler (1) nach einem der vorhergehenden Ansprüche, **dadurch gekennzeichnet, dass** die Sensoren (112, 122) als Drucksensoren oder Kraftsensoren, oder als berührungslose Sensoren, insbesondere als induktive oder kapazitive Sensoren, ausgebildet sind.

11. Feldhäcksler (1) nach einem der vorhergehenden Ansprüche, **dadurch gekennzeichnet, dass** die Steuerungs- und Regelungseinrichtung (10) dazu ausgebildet ist, Messsignale (S111, S121) der Sensoren (112, 122) zu erfassen, die Querverteilung anhand der Messsignale (S111, S121) zu ermitteln, und Aktoren des Vorsatzgerätes (2) und/oder der Aggregate (4 - 7) anhand der erfassten Querverteilung zu steuern.

12. Feldhäcksler (1) nach einem der vorhergehenden Ansprüche, **dadurch gekennzeichnet, dass** der Einzugskanal (4) lösbar an einem Korpus (11) des Feldhäckslers (1) befestigt ist, oder dass das Vorsatzgerät (2) austauschbar an einer dem Korpus (11) abgewandten Seite des Einzugskanals (4) angeordnet ist.

13. Verfahren zum Steuern eines Feldhäckslers (1) nach einem der Ansprüche 1 - 11, mit den Schritten:
• Erfassen der Messsignale (S111, S121) einer Vielzahl von Sensoren (112, 122) einer, insbesondere sich über eine Breite (40, 50) des Erntegutbearbeitungskanals (100) erstreckenden, Messleiste (111, 121),
• Ermitteln der Querverteilung des Erntegutes anhand der Messsignale (S111, S121), und
• Ansteuern von Aktoren des Vorsatzgerätes (2) und/oder der Aggregate (4, 5, 6, 7) der Erntegutmaschine (1) in Abhängigkeit von der erfassten Querverteilung.

14. Verfahren nach Anspruch 13, **dadurch gekennzeichnet, dass** eine Auswahl der anzusteuernden Aktoren und/oder ihrer Einstellparameter anhand von vordefinierten, insbesondere erntegutabhängigen und/oder erntebedingungsabhängigen, Einstellparametern und/oder vordefinierten Abläufen erfolgt.

15. Verfahren nach einem der Ansprüche 13 - 14, **dadurch gekennzeichnet, dass** das Erfassen der Messsignale (S111, S121) der Messleiste (111, 121) zyklisch wiederholt wird.

## Claims

1. A forage harvester (1) comprising an attachment (2) for receiving crop material (3), which is arranged upstream of a crop material processing passage (100), which includes an intake passage (4) for feeding the crop material (3) into the forage harvester (1), a chopping drum (5) for processing the crop material (3) and a discharge chute (8) for discharge of the crop material (3),
**characterised in that**
the forage harvester (1) also has a measuring bar (111, 121) having a plurality of sensors (112, 122) which at least partially extends through the crop material processing passage (100) and is provided for detecting a transverse distribution of the crop material in the crop material processing passage (100).

2. A forage harvester (1) according to claim 1 **characterised in that** it includes an open-loop and closed-loop control device (10) which is provided to adjust the attachment (2) and/or assemblies (4-7) of the forage harvester (1), in particular intake members (41-44) of the intake passage (4), a pre-pressing device (45) of the intake passage (4), the chopping drum (5), conditioning rollers (61, 62) and/or a post-acceleration drum (7) in dependence on the detected transverse distribution.

3. A forage harvester (1) according to one of the preceding claims **characterised in that** at least a first measuring bar (111) is arranged in the intake passage (4), in particular at a stripper bar member (46) of an intake member (44) or a side towards the crop material of the crop material processing passage (100) and/or a second measuring bar (121) is arranged at the chopping drum (5), at one of the conditioning rollers (61, 62) or at the post-acceleration drum (7).

4. A forage harvester (1) according to one of the preceding claims **characterised in that** the open-loop and closed-loop control device (10) is adapted to provide for open-loop or closed-loop control of the attachment (2) and/or the assemblies (4-7) in such a way that the transverse distribution is rendered uniform, in particular along the measuring bar (111, 121), and/or to prevent material from passing around one of the assemblies (4-7) of the forage harvester.

5. A forage harvester (1) according to one of the preceding claims **characterised in that** the open-loop and closed-loop control device (10) is adapted to adjust a rotary speed at least of one of the assemblies (41-44, 5, 61, 62, 7) of the forage harvester (1) and/or at least one conveyor member (22, 27, 28) of the attachment (2), in particular
• the rotary speed of one or more conveyor members (22, 27, 28) of the attachment (2),
• the rotary speed of one or more intake members (41-44) of the intake passage (4),
• the rotary speed of the chopping drum (5),
• the rotary speed of the conditioning rollers (61, 62), and/or
• the rotary speed of the post-acceleration drum (7),
in dependence on the detected transverse distribution, in particular independently of each other.

6. A forage harvester (1) according to one of the preceding claims **characterised in that** the open-loop and closed-loop control device (10) is adapted to adjust
• geometries of the attachment (2),
• geometries of the crop material processing passage (100) and/or
• a pre-pressing force acting on the crop material in the intake passage (4),
in dependence on the detected transverse distribution, in particular independently of each other.

7. A forage harvester (1) according to one of the preceding claims **characterised in that** the open-loop and closed-loop control device (10) is adapted to adjust
• a shape of delimiting combs or delimiting plates (23, 24, 25, 26, 261),
• a position of the delimiting combs or delimiting plates (23, 24, 25, 26, 261),
• an angle (αi) of the delimiting combs or delimiting plates (23, 24, 25, 26, 261),
• a spacing (Ai, Hi) of a conveyor member (22, 27, 28) or an intake member (41-44) from the delimiting **cones** or delimiting plates (23, 24, 25, 26, 261), and/or
• a spacing (Ai, Hi) of the delimiting combs or delimiting plates (23, 24, 25, 26, 261) relative to each other
in dependence on the detected transverse distribution, in particular independently of each other.

8. A forage harvester (1) according to one of the preceding claims **characterised in that** the open-loop and closed-loop control device (10) includes a user interface (90) which is provided for the output, in particular for the display, of the detected transverse distribution.

9. A forage harvester (1) according to one of the preceding claims **characterised in that** the sensors (112, 122) of the measuring bar (111, 121) are arranged one beside the other and are disposed distributed substantially over the width (40, 50) of the measuring bar (111, 121).

10. A forage harvester (1) according to one of the preceding claims **characterised in that** the sensors (112, 122) are in the form of pressure sensors or force sensors or in the form of contactless sensors, in particular inductive or capacitive sensors.

11. A forage harvester (1) according to one of the preceding claims **characterised in that** the open-loop and closed-loop control device (10) is adapted to detect measurement signals (S111, S121) of the sensors (112, 122), to ascertain the transverse distribution on the basis of the measurement signals (S111, S121) and to control actuators of the attachment (2) and/or the assemblies (4-7) on the basis of the detected transverse distribution.

12. A forage harvester (1) according to one of the preceding claims **characterised in that** the intake passage (4) is releasably secured to a body (11) of the forage harvester (1) or the attachment (2) is arranged replaceably at a side of the intake passage (4), that is away from the body (11).

13. A method of controlling a forage harvester (1) according to one of claims 1 to 11 comprising the steps:
• detecting the measurement signals (S111, S121) of a plurality of sensors (112, 122) of a measuring bar (111, 121) which in particular extends over a width (40, 50) of the crop material processing passage (100),
• ascertaining the transverse distribution of the crop material on the basis of the measurement signals (S111, S121), and
• actuating actuators of the attachment (2) and/or the assemblies (4, 5, 6, 7) of the harvester (1) in dependence on the detected transverse distribution.

14. A method according to claim 13 **characterised in that** selection of the actuators to be actuated and/or the adjustment parameters thereof is effected on the basis of predefined, in particular crop material-dependent and/or crop condition-dependent, adjustment parameters and/or predefined procedures.

15. A method according to one of claims 13 and 14 **characterised in that** detection of the measurement signals (S111, S121) of the measuring bar (111, 121) is repeated cyclically.

## Revendications

1. Ensileuse (1) comprenant un outil frontal (2) pour ramasser du produit récolté (3), lequel est disposé en amont d'un canal de traitement de produit récolté (100) qui comprend un canal d'alimentation (4) pour amener le produit récolté (3) dans l'ensileuse (1), un rotor de hachage (5) pour traiter le produit récolté (3), et une goulotte d'éjection (8) pour éjecter le produit récolté (3), **caractérisée en ce que** l'ensileuse (1) comporte en outre une barrette de mesure (111, 121) avec une pluralité de capteurs (112, 122), qui traverse au moins en partie le canal de traitement de produit récolté (100) et est prévue pour détecter une répartition transversale du produit récolté dans le canal de traitement de produit récolté (100).

2. Ensileuse (1) selon la revendication 1, **caractérisée en ce qu'**elle comprend un équipement de commande et de régulation (10) qui est prévu pour régler l'outil frontal (2) et/ou des organes (4-7) de l'ensileuse (1), en particulier des organes d'alimentation (41-44) du canal d'alimentation (4), un équipement de précompression (45) du canal d'alimentation (4), le rotor de hachage (5), des rouleaux de conditionnement (61, 62) et/ou un tambour distributeur-accélérateur (7) en fonction de la répartition transversale détectée.

3. Ensileuse (1) selon une des revendications précédentes, **caractérisée en ce qu'**au moins une première barrette de mesure (111) est disposée dans le canal d'alimentation (4), en particulier sur une racle (46) d'un organe d'alimentation (44) ou sur un côté du canal de traitement de produit récolté (100) tourné vers le produit récolté, et/ou une seconde barrette de mesure (121) est disposée sur le rotor de hachage (5), sur un des rouleaux de conditionnement (61, 62) ou sur le tambour distributeur-accélérateur (7).

4. Ensileuse (1) selon une des revendications précédentes, **caractérisée en ce que** l'équipement de commande et de régulation (10) est conçu pour commander ou réguler l'outil frontal (2) et/ou les organes (4-7), de façon que la répartition transversale, en particulier le long de la barrette de mesure (111, 121), soit uniformisée et/ou de façon à empêcher une rotation de produit autour d'un des organes (4-7) de l'ensileuse.

5. Ensileuse (1) selon une des revendications précédentes, **caractérisée en ce que** l'équipement de commande et de régulation (10) est conçu pour régler une vitesse de rotation au moins d'un des organes (41-44, 5, 61, 62, 7) de l'ensileuse (1) et/ou au moins d'un organe d'amenée (22, 27, 28) de l'outil frontal (2), en particulier
• la vitesse de rotation d'un ou plusieurs organes d'amenée (22, 27, 28) de l'outil frontal (2),
• la vitesse de rotation d'un ou plusieurs organes d'alimentation (41-44) du canal d'alimentation (4)
• la vitesse de rotation du rotor de hachage (5),
• la vitesse de rotation des rouleaux de conditionnement (61, 62) et/ou
• la vitesse de rotation du tambour distributeur-accélérateur (7),
en fonction de la répartition transversale détectée, en particulier indépendamment les unes des autres.

6. Ensileuse (1) selon une des revendications précédentes, **caractérisée en ce que** l'équipement de commande et de régulation (10) est conçu pour régler
• des géométries de l'outil frontal (2),
• des géométries du canal de traitement de produit récolté (100), et/ou
• une force de précompression agissant sur le produit récolté dans le canal d'alimentation (4)
en fonction de la répartition transversale détectée, en particulier indépendamment les unes des autres.

7. Ensileuse (1) selon une des revendications précédentes, **caractérisée en ce que** l'équipement de commande et de régulation (10) est conçu pour régler
• une forme de peignes limiteurs ou de plaques limiteuses (23, 24, 25, 26, 261),
• une position des peignes limiteurs ou des plaques limiteuses (23, 24, 25, 26, 261),
• un angle (αi) des peignes limiteurs ou des plaques limiteuses (23, 24, 25, 26, 261),
• une distance (Ai, Hi) d'un organe d'amenée (22, 27, 28) ou d'un organe d'alimentation (41-44) aux peignes limiteurs ou aux plaques limiteuses (23, 24, 25, 26, 261) et/ou
• une distance (Ai, Hi) des peignes limiteurs ou des plaques limiteuses (23, 24, 25, 26, 261) entre eux
en fonction de la répartition transversale détectée, en particulier indépendamment les uns des autres.

8. Ensileuse (1) selon une des revendications précédentes, **caractérisée en ce que** l'équipement de commande et de régulation (10) comprend une interface utilisateur (90) qui est prévue pour éditer, en particulier pour afficher, la répartition transversale détectée.

9. Ensileuse (1) selon une des revendications précédentes, **caractérisée en ce que** les capteurs (112, 122) de la barrette de mesure (111, 121) sont disposés côte à côte et sont disposés en étant répartis sensiblement sur la largeur (40, 50) de la barrette de mesure (111, 121).

10. Ensileuse (1) selon une des revendications précédentes, **caractérisée en ce que** les capteurs (112, 122) sont conformés en capteurs de pression ou capteurs de force ou en capteurs sans contact, en particulier en capteurs inductifs ou capacitifs.

11. Ensileuse (1) selon une des revendications précédentes, **caractérisée en ce que** l'équipement de commande et de régulation (10) est conçu pour détecter des signaux de mesure (S111, S121) des capteurs (112, 122), pour déterminer la répartition transversale sur la base des signaux de mesure (S111, S121) et pour commander des actionneurs de l'outil frontal (2) et/ou de l'organe (4-7) sur la base de la répartition transversale détectée,.

12. Ensileuse (1) selon une des revendications précédentes, **caractérisée en ce que** le canal d'alimentation (4) est fixé de façon amovible à un corps (11) de l'ensileuse (1), ou **en ce que** l'outil frontal (2) est disposé de façon échangeable sur un côté du canal d'alimentation (4) orienté à l'opposé du corps (11).

13. Procédé de commande d'une ensileuse (1) selon une des revendications 1 à 11, comprenant les étapes consistant à :
• détecter les signaux de mesure (S111, S121) d'une pluralité de capteurs (112, 122) d'une barrette de mesure (111, 121), en particulier s'étendant sur une largeur (40, 50) du canal de traitement de produit récolté (100),
• déterminer la répartition transversale du produit récolté sur la base des signaux de mesure (S111, S121), et
• commander les actionneurs de l'outil frontal (2) et/ou des organes (4, 5, 6, 7) de la machine de récolte (1) en fonction de la répartition transversale détectée.

14. Procédé selon la revendication 13, **caractérisé en ce qu'**une sélection des actionneurs à commander et/ou de leurs paramètres de réglage s'effectue sur la base de paramètres de réglage prédéfinis, en particulier dépendants du produit récolté et/ou dépendants des conditions de récolte, et/ou de séquences prédéfinies.

15. Procédé selon une des revendications 13-14, **caractérisé en ce que** la détection des signaux de mesure (S111, S121) de la barrette de mesure (111, 121) est répétée cycliquement.
